# EUROPEAN PATENT SPECIFICATION

(11) **EP 4 156 966 B1**
(45) Date of publication and mention of the grant of the patent: **17.07.2024**
(21) Application number: 21726684.0
(22) Date of filing: 25.05.2021
(51) Int. Cl.: A23L 7/104, A23L 33/135, A23L 33/00

(54) **PROCESS FOR LOWERING PHYTIC ACID IN CEREALS**
VERFAHREN ZUR ERNIEDRIGUNG DER PHYTINSÄURE IN GETREIDE
PROCÉDÉ POUR DIMINUER L'ACIDE PHYTIQUE DANS DES CÉRÉALES

(30) Priority: 25.05.2020 WO PCT/EP2020/064411
(43) Date of publication of application: 05.04.2023
(73) Proprietor: N.V. Nutricia, 2712 HM Zoetermeer (NL)
(72) Inventor: DA SILVA PEREIRA, Ana Catarina, 3584 CT Utrecht (NL); LINHART, Camilla, 3584 CT Utrecht (NL); MOES, Hans Thomas, 3584 CT Utrecht (NL); SCHOUTEN, Bastiaan, 3584 CT Utrecht (NL); SICARD ÉPOUSE BOURDET, Raphaëlle, 91120 Palaiseau (FR); BONIFACE ÉPOUSE GUIRAUD, Audrey, 91940 Les Ulis (FR)
(74) Representative: Nederlandsch Octrooibureau
(86) International application number: PCT/EP2021/063943
(87) International publication number: WO 2021/239750

(56) References cited:
- EP-A1- 1 208 752
- WO-A1-00/72700
- WO-A1-2014/125485
- WO-A1-2014/148887
- WO-A1-98/11788
- US-A1- 2002 136 754

## Description

### Field of the invention

The invention is in the field of dry cereal food, in particular as weaning foods for infants and toddlers. The present invention particularly relates to the field of cereals with improved mineral bio-availability.

### Background art

Infants after birth are usually fed breastfeeding or a liquid infant formula that is as close as possible to the human milk content. Breastfeeding and / or administration of infant formula typically continues during the first year of infancy. In the first 4 to 6 months of life this is the sole source of nutrition. However, typically at 4-6 months of age, infants develop interest and preparation for other foods, weaning foods. It is recommended that infants at the start of weaning take cereals as weaning foods. In order to meet the nutritional requirements the bio-accessibility and bio-availability of minerals and trace elements from weaning foods should be high to support the infant's and young child's needs during rapid growth and development. Infant and young children cereals are known in the art. Infant cereals are cereal-containing compositions that are administered to infants. Infant cereals are usually administered using a spoon and can be provided, for example, as dry cereals for infants. The dry cereals are to be reconstituted before consumption with for instance follow on milk. International food standards provide guidelines on what ingredients infant cereals should contain, such as EU directive 2006/125/EC.

However, cereals, such as wheat, sorghum, and millet, contain phytic acid (myo-inositol hexakisphosphate IP6), a natural component and phosphorous storage form of the plant. Phytic acid binds strongly to minerals and trace elements such as Fe³⁺, Zn²⁺, Cu²⁺, Mn²⁺, Ca²⁺ and Mg²⁺ at the pH of the digestive tract (see Phillippy, Nutr. Res. 2006, 26(3), 146-149). This makes the minerals and trace elements unavailable for absorption. The minerals in the cereals therefore have a reduced bio-accessibility and hence a reduced bio-availability. Iron plays several vital roles in the body, as it is present in hemoglobin, cytochromes in the electron transport chain, and some enzymes. Iron deficiency is one of the most common nutritional deficiencies, in particular in infants, toddlers and pregnant women. This is especially a risk in infants that start weaning when the food consumed in weaning phase is based solely on cereals [and legumes] and milk, when haeme-iron is not yet part of the diet, and when human milk consumption (providing lactoferrin bound iron) is reducing. Iron deficiency can turn into anemia, the most common nutritional disorder in the world, wherein the body's stores of iron have been depleted and the body is unable to maintain levels of hemoglobin in the blood. Especially infants and young children, and pregnant women are prone to this disease, as they have increased iron needs, and the WHO has estimated that 43% of the world's infants and young children suffer from it. Iron deficiency has serious consequences for the health and development of infants and young children. A lack of sufficient supply or uptake of iron during the first year of life has for instance been shown to negatively impact neural development and that this negative impact can be irreversible. Also, elderly often suffer from impaired mineral adsorption, which may lead to iron (and other mineral) deficiency.

Infants cereal can be fortified with iron in order to overcome the disproportional ratio of phytic acid over iron. However, and specially in developing countries, extensive fortification of infant cereals with iron can lead to serious infections when not all iron is adsorbed but instead reach the colon where pathogens in the microbiota can grow and proliferate. Therefore there is a need to address the problem if phytic acid and iron deficiency in cereals another way than iron fortification.

WO 2000/072700 discloses cereals for infants with reduced phytic acid. The cereal product is obtained by incubating a mixture including a starch base, a phytic acid containing protein source and a whole grain cereal flour which is an endogenous phytase source, to reduce the phytic acid content of the mixture. The mixture is then heated to gelatinise the starch base and inactivate the endogenous phytase. WO 2007/04966 relates to the use of at least one strain of *Lactobacillus plantarum* for the preparation of a composition for increasing the absorption of at least one kind of metal/metal ion in a mammal, preferably a human. It was shown that *Lactobacillus plantarum* was not able to improve iron bio-availability upon fermentation of oat meal gruel followed by bacterial deactivation by pasteurization. WO 2014/016398 relates to a method for improving the nutritional value by reducing the anti-nutritional factors in a food grain. One aspect of the invention involves preparing a bacterial preparation containing viable lactic acid bacteria; and soaking the food grain in the bacterial preparation; wherein the lactic acid bacteria have been at least partially removed from the bacterial preparation before soaking.

EP1208752, WO98/11788 and US2002/136754 disclose methods to reduce phytic acid in nutritional compositions. EP1208752 discloses a cereal and/or legume product, particularly for infants, and a process for manufacturing such products including fiber hydrolysis, acidification, heat-treatment and drying. The cereal is selected for being an endogeneous phytase source, and the aim is to activate the endogeneous phytase in the cereals and fibre-hydrolyzing enzymes simultaneously, using acidification. In order to acidify the composition, the pH is adjusted by fermenting the mixture with a lactic acid bacterium such as *Lactobacillus plantarum,* for a time and at a temperature favourable to the respective activities of both the lactic acid bacteria and the fibre-hydrolyzing enzyme, especially for 1 to 10 hours at from 35 to 45°C. There is a range of lactic acid bacteria mentioned, all selected for achieving fermentation; there is no selection of a lactic acid bacterium on phytase activity to be derived from EP1208752. In example 1, a mixture of *Lactobacillus paracasei* and *Lactobacillus sakei* was added, examples 2 and 4 use *Lactobacillus paracasei,* and example 3 describes a mixture of *Lactobacillus plantarum* and *Lactobacillus casein.* In spite of the attempts in the prior art, there remains a need in the art for a process for efficiently reducing the phytic acid content of fermented cereals, in order to increase the bio-availability of the minerals present in (or added to) the fermented cereals. The present invention provides in this need.

### Summary of the invention

The inventors have developed a process for reducing the phytate content in fermented cereals. The inventors have for the first time realized that the phytase activity that is present in some lactic acid bacteria that are suitable to ferment cereals, can be used after the fermentation step to reduce the phytic acid content of the fermented cereals. As such, the phytic acid content in fermented cereals can be efficiently reduced. The present invention thus concerns a process for producing a dry cereal composition, wherein phytase-positive lactic acid bacteria are used to ferment the phytic acid containing cereals in step (a), and the fermented cereals are heated in step (b) for optimal phytase activity to break down the phytic acid.

The invention further concerns the dried cereal composition that can be obtained by the process, and its ready-to-feed reconstituted variant, as well as several uses or applications of the process or dried cereal composition. The composition according to the invention has a reduced phytic acid content compared to conventional compositions of cereals or fermented cereals. Therefore, the composition of the invention is useful for increasing the bio-availability of minerals and/or bio-accessibility of minerals in cereals. Minerals present in the composition itself as well as those in the further components of the diet, with which the cereal composition of the invention is consumed, are better absorbable by the body.

### Detailed description

The inventors have developed a process for reducing the phytate content in fermented cereals, evidenced in wheat semolina flour, whole wheat, buckwheat, spelt, rice and maize/corn. The inventors have for the first time realized that the phytase activity of some lactic acid bacteria, that are suitable to ferment cereals, can be used after the fermentation step to reduce the phytic acid content of the fermented cereals. At the same time, the growth and/or metabolic activity of the lactic acid bacteria is reduced or even stopped, thus inactivating the bacteria after they have completed the fermentation process. As such, the phytic acid content in fermented cereals can be efficiently reduced. Therefore, the composition of the invention is useful for increasing the bio-availability of minerals and/or bio-accessibility of minerals in cereals. Minerals present in the composition itself as well as those in the further components of the diet, with which the cereal composition of the invention is consumed, are better absorbed by the body. In the present invention is equally applicable to "phytate" and "phytic acid", and these terms are used interchangeably. In the context of the phytate and phytic acid refer to myo-inositol hexakisphosphate (IP6).

Thus, a first aspect of the invention concerns a process for producing a dry cereal composition, comprising:
(a) fermenting phytic acid containing cereals by phytase-positive lactic acid bacteria at a temperature below 45 °C, until a pH of at most 5.9, preferably below 5.5 is reached,
(b) heating the fermented cereals obtained in step (a) to a temperature in the range of 40 - 55 °C, for a period of at least 1.5 h; and
(c) drying the fermented and phytase treated cereals originating from step (b) to obtain the dry cereal composition.
Step a) preferably involves selecting one or more lactic acid bacterium for phytase activity, for example using the phytase activity assessment of example 1.

In a second aspect, the invention concerns a dry cereal composition obtainable by the process according to the first aspect of the invention. The dry cereal composition according to the invention may also be defined as comprising fermented cereals and non-replicating lactic acid bacteria, wherein the composition has a molar ratio of phytate to iron of at most 1, at most 5000 cfu lactic acid bacteria per gram, and 0.1 to 1.5 wt% lactic acid and at least 0.015 mg iron per gram, based on dry weight.

In a third aspect, the invention concerns a ready to feed cereal composition obtainable by reconstituting the dry cereal composition according to the invention with a food grade liquid.

In a further aspect, the invention concerns the composition according to the second or third aspect for use in providing nutrition to a subject at risk of mineral deficiency, preferably wherein the subject is selected from infants, young children, pregnant or lactating women and elderly. Worded differently, the invention also pertains to a method for providing nutrition to a subject at risk of mineral deficiency, preferably wherein the subject is selected from infants, young children, pregnant or lactating women and elderly, wherein the method involves administering the composition according to the second or third aspect to the subject at risk.

In a further aspect, the invention concerns the composition according to the second or third aspect for use in preventing mineral deficiency, preferably iron deficiency and/or anaemia. Related thereto is the further aspect of the invention concerning the composition according to the second or third aspect for use in increasing the bio-availability of minerals and/or bio-accessibility of minerals in cereals. Related thereto is the further aspect of the invention concerning a method for increasing the bio-availability of minerals in a human subject, comprising administering the composition according to second or third aspect, preferably wherein the mineral is selected from iron, zinc, calcium, magnesium and manganese. In a further aspect, the invention concerns the use of the process according to the first aspect for decreasing phytic acid levels in cereal.

The present invention involves a process for producing a dry cereal composition, the dried cereal composition that can be obtained by the process, and its ready-to-feed reconstituted variant, as well as several uses or applications of the process or the dried cereal composition. Hence, all defined here below for the process according to the invention equally applies to the cereal composition according to the invention, and vice versa. Likewise, all defined here below for the cereal composition according to the invention equally applies to the uses and applications according to the invention.

### Process

The process according to the invention is for producing a dry cereal composition. Herein, the cereal is fermented and the naturally occurring phytic acid content is lowered. The process may thus also be referred to as a process for reducing the phytic acid content of cereals, or preferably of fermented cereals. Since a reduced phytic acid content leads to increased bio-availability of minerals, the process according to the invention may thus also be referred to as a process for increasing bio-availability of minerals in cereals, or preferably in fermented cereals.

The process according to the invention comprises:
(a) fermenting phytic acid containing cereals by phytase-positive lactic acid bacteria at a temperature below 45 °C, until a pH of at most 5.9, preferably below 5.5 is reached, and
(b) heating the fermented cereals obtained in step (a) to a temperature in the range of 40 - 55 °C, for a period of at least 1.5 h; and
(c) drying the fermented and phytase treated cereals originating from step (b) to obtain the dry cereal composition.

The process according to the invention may further comprise a step (d) prior to the drying step (c), wherein further ingredients are added and mixed and mixed with the fermented cereals. Step (d) is preferably performed downstream of step (b), i.e. in between step (b) and (c). Such further ingredients preferably include at least a source of iron.

The process according to the invention may further comprise a step (e) in between step (b) and (c), wherein the fermented cereals are cooked. As step (e) is performed downstream of step (b), the fermented cereals having a reduced phytic acid content are subjected to step (e).

It is especially preferred that the process according to the invention includes both steps (d) and (e), in which case step (d) may be performed upstream or downstream of step (e). Preferably, both steps are performed in between steps (b) and (c).

Any cereal can be used in the context of the present invention, as long as it contains phytic acid. The process according to the invention is able to reduce the phytic acid content even in cereals without any relevant endogeneous phytase activity, even after fermentation. The cereals that are subjected to the process according to the invention are preferably selected from wheat (including wheat semolina, whole wheat, spelt, buckwheat), rice, rye, barley, sorghum and millet, preferably wheat, rice, sorghum and millet, even more preferably wheat, sorghum and millet, most preferably the cereal is wheat. The cereal may be a mixture of cereals, wherein it is preferred that at least one is selected from the list above. These cereals are known to contain significant amounts of phytic acid, and are especially suitable to be subjected to the process according to the invention. In one embodiment, the cereal is not only maize. In an especially preferred embodiment, the cereal is semolina. It is believed that significant consumption of these cereals, without taking measures to reduce the phytic acid content, may lead to increased deficiency in minerals such as iron. Cereals such as wheat, sorghum and millet are regularly consumed in African and Asian populations, where also a larger-than-average iron deficiency occurs.

In one embodiment, the cereals in step a) are selected for not having endogeneous phytase activity. These could be cereals which have been pre-treated with heat for increasing food safety, but which results in reducing any potential endogeneous phytase activity. Hence, the present process has the advantage that it works also in these cases where cereals have first been subjected to heat, for example temperatures above 80 °C, e.g. boiled or cooked, resulting in pre-treated cereals having no or reduced endogenous phytase activity.

### Step (a): Fermenting

In step (a), the cereals are fermented by phytase-positive lactic acid bacteria. The process therefore preferably involves selecting one or more lactic acid bacterium for phytase activity, for example using the phytase activity assessment of example 1. Such fermentation of cereals is known to the skilled person and can be performed in any conceivable way. For example, the fermentation may involve preparing a slurry of the cereal, pre-culturing the lactic acid bacteria and contacting the cereal slurry with the pre-cultured the lactic acid bacteria. The cereals are preferably subjected to step (a) in milled form, such as in the form of a cereal flour. The slurry may be prepared by mixed the cereals with water, preferably at a total solid content in the range of 10 - 50 wt%, preferably 25 - 40 wt%.

Step (a) is performed at a temperature below 45 °C, preferably between 20 and 45 °C, most preferable between 30 and 40 °C. The skilled person is capable of determining the optimal conditions for growth of the lactic acid producing bacteria. Also, the skilled person is capable of determining the duration of step (a). Typically, the fermentation may last 0.5 - 10 h, more preferably 2 - 7.5 h. In step (a), the fermentation is continued until the mixture of cereals being fermented has reached a pH of at most 5.9, preferably below 5.5, preferably in the range of 5 - 5.5, more preferably in the range of 5 - 5.3, most preferably in the range of 5.1 - 5.2. Such pH levels were found especially advantageous for the performance of step (b), in terms of optimal phytase activity. Additionally, the pH lowering obtained by the fermentation of step (a) provides the dry cereal product of the invention with in increased shelf-life. A further benefit of the pH of below 5.5 is that the risk of (bacterial) contamination and spoilage during the process is reduced. Reducing the pH too much will hamper the growth of lactic acid bacteria, and thus enzyme production, and may have detrimental effects on the taste and texture of the final product, and is therefore not preferred. The lactic acid bacteria employed in step (a) are phytase-positive. In other words, the lactic acid bacteria have phytase activity. The lactic acid bacteria may also be referred to as phytate degrading lactic acid bacteria. Such lactic acid bacteria are known in the art. Not all lactic acid bacteria have this activity, and the skilled person is capable of determining whether a strain of lactic acid bacteria is phytase-positive. In one embodiment, the phytase-positive lactic acid bacteria are selected via the procedure in Example 1. Preferably, the lactic acid that is prepared by the lactic acid bacteria is predominantly L-lactic acid. Preferably, the lactic acid bacteria are selected from the group consisting of *Lactobacillus, Leuconostoc, Lactococcus, Streptococcus* and *Bifidobacterium.* For example *Leuconostoc mesenteroides, Lactobacillus brevis, Lactococcus lactis, Bifidobacterium longum, Bifidobacterium breve, Bifidobacterium infantis, Bifidobacterium animalis, Bifidobacterium adolescentis* and *Bifidobacterium bifidum.* In one embodiment, the lactic acid bacteria are selected from the genera *Lactobacillus, Lactococcus* and *Bifidobacteria.* An especially preferred strain is a *Lactococcus lactis* strain CNCM I-5450 as identified in Example 1. This strain has been deposited in accordance with the Budapest Treaty at the Collection Nationale de Cultures de Microorganismes (CNCM) (Institut Pasteur, 25 Rue du Docteur Roux, Paris, France) on 20^{th} November 2019 under reference number CNCM I-5450 by Compagnie Gervais Danone, 17 Boulevard Haussmann, 75009 Paris, France.

Step (a) affords fermented cereals and allows for growth of the lactic acid bacteria, as such generating phytase active bacterial biomass. This mixture is subjected to step (b) to activate the phytase activity. The fermentation of step (a) magnifies the phytase activity of the lactic acid bacteria, which is to be activated in step (b). Typically, the process proceeds from step (a) to step (b) by simply increasing the temperature of the fermented cereals, without any intermediate steps. Step (a) may also afford valuable components as typically obtained during fermentation (postbiotics). These components include at least lactic acid, and may further include short chain fatty acids, oligosaccharides and other products of a fermentation. These postbiotics are included in the composition of fermented cereals and further improve the nutritional value of the cereal composition according to the invention.

### Step (b): Activating phytase

The inventors found that increasing the temperature in step (b) surprisingly further reduced the phytate content in the fermented cereals. In step (b), the phytase activity in the bacterial biomass is activated, by heating the fermented cereals to a temperature in the range of 40 - 55 °C, for a period of at least 1.5 h. These conditions were found to be optimal for phytase activity, but suboptimal or even detrimental for metabolic activity of the lactic acid bacteria, such that the bacteria no longer replicate, but the phytase activity is promoted. The stimulated phytase activity then breaks-down, by hydrolysis, the phytic acid (myo-inositol hexakisphosphate (IP6)) that is present in the fermented cereals. The pentakisphosphate variant (IP5) is also broken down during step (b). Increasing the temperature to higher values quickly eliminated any phytase activity. Increasing the temperature to higher values is less preferred because it may quickly eliminate any phytase activity. Although it is preferred that the process according to the invention includes a downstream cooking step, it is essential that for a significant amount of time (at least 1.5 h) the composition is held at an elevated temperature well below 100 °C in order for the phytase activity to break-down phytic acid. Contamination by pathogenic bacteria, the chance of which is normally increased at the temperature at which step (b) is performed, is reduced by the lowering of the pH achieved during step (a). Also, the lactic acid bacteria are inactivated, such that overall a shelf-stable product is obtained.

Advantageously, the slurry of cereals that are being fermented is subjected as such to step (b) by increasing the temperature of the slurry. The skilled is capable of determining the optimal conditions for step (b), e.g. by determining the phytase activity and/or the phytic acid content of the fermented cereals. It is preferred that a pH of 5.5 or below is reached during step b). Preferably, where step a) comprises fermenting phytic acid-containing cereals by phytase-positive lactic acid bacteria at a temperature below 45 °C, until a pH below 5.5 is reached, the pH is kept more or less constant during step (b). In one embodiment, the pH is kept below 5.5, preferably in the range of 5 - 5.5. At such pH levels, the phytase activity was found to be optimal. As such, the combination of a fermentation step, to reduce the pH to these levels, and a phytase activation step, gave optimal results in terms in phytate reduction.

A duration of 1.5 h was found to be sufficient for the desired reduction in phytic acid content. Optimal results have been obtained with a duration of 2 h as well as with a duration of 16 h. Preferably, the temperature of step (b) was kept for at least 2 h, and preferably not longer than 24 h, more preferably not longer than 16 h. The temperature at which step (b) is performed is preferably in the range of 45 - 55 °C, more preferably 45 - 50 °C. Step (b) is performed at a higher temperature than step (a). Preferably, the temperature of step (b) is at least 2 °C higher than in step (a), more preferably 3 - 30 °C higher than in step (a), most preferably 5 - 25 °C higher than in step (a).

### Step (c): Drying

The process according to the invention affords a dry cereal composition. Hence, the fermented cereals which have been treated with the activated phytase in step (b), are dried in step (c). Drying may be achieved by any means, or combination of means, known in the art. In a preferred embodiment, the drying is performed by drum drying, which is ideally suitable for the drying of slurries into powders or flakes. Alternatively extrusion may be used.

Typically, the drying of step (c) requires elevated temperatures, such as above 40 °C or above 45 °C, preferably a temperature in the range of 100 to 120 °C. Advantageously, the fermented cereals obtained in step (b) are not cooled, in other words are kept on temperature, prior to step (c), such that no energy is lost and/or no additional energy is required to heat the fermented cereals, in step (b) or (c). Additional heating to a higher temperature may be required in step (c), depending on the exact type of heating used.

Although the final water content or water activity of the dried cereal composition may depend on the exact nature of the composition, it is preferred that the drying is continued until a water activity of less than 0.3 is achieved.

The dried cereal composition obtained in step (c) may be further processed into a nutritional composition, such as a nutritional supplement or a nutritional composition for weaning infants. The skilled person understands what steps have to be undertaken to make the desired end product. Such further processing may include one or more of supplementing with other ingredients, such as a source of protein, a source of lipid, a source of carbohydrates (e.g. lactose), vitamins and/or minerals, in particular iron, pelletizing, heat treating, packaging, etc. The dried cereal composition may be reconstitutable, in that it can be reconstituted with a food grade liquid such as water, follow-on milk or cow's milk. The reconstituted cereal composition is preferably a ready to consume cereal composition. The cereal composition, in dried form or after reconstitution, is preferably packaged aseptically, as known in the art. Aseptical packaging is especially preferred for reconstituted cereal composition, to provide a ready to consume cereal containing product that is packed aseptically.

### Step (d): Supplementation

In a preferred embodiment, the process further comprises a step wherein the fermented cereals are supplemented with one or more further ingredients, in order to optimize the nutrient profile of the final composition that is obtained. Depending on the desired type of composition, such as for example a weaning infant nutrition or a supplement for lactating women, the skilled person knowns which further ingredients are preferentially added. In one embodiment, step (d) involves the supplementation of one or more of minerals (e.g. a source of iron), vitamins (e.g. vitamin B1 and/or C), flavourings (e.g. fruit flavour). As will be understood by the skilled person, the supplementation of step (d) includes mixing of the ingredient with the fermented cereals. Such mixing of ingredients is known to the skilled person, and may for example be performed by mixing the ingredients at 20 - 50 °C, typically about 40 °C, for up to 3 h. If performed, step (d) is preferably performed upstream of drying step (c), and preferably downstream of step (b).

As the composition according to the invention is particularly suitable for increased mineral bio-availability of mineral adsorption by a subject, it is preferred that the supplementation of step (d) includes at least a mineral source. Herein, it is preferred that the mineral source if selected from a source of iron, a source of zinc, a source of calcium, a source of magnesium or a source of manganese, or mixtures thereof, more preferably at least a source of iron. As such, the adsorption of minerals, in particular iron, by the subject that is administered with the composition, is further improved. In one embodiment, no iron is supplemented. Suitable mineral sources are known in the art. For example, the iron source may be selected from the group consisting of ferrous sulphate, ferrous lactate, ferrous gluconate, ferrous bisglycinate, ferrous citrate, ferrous fumarate, ferric diphosphate, ferric ammonium citrate and mixtures thereof, more preferably ferrous sulphate and/or ferrous lactate.

Compared to prior art cereal compositions, the need for iron supplementation is reduced while maintaining the same amount of iron bio-availability, because of the reduced phytate content. Such reduced iron supplementation also has beneficial effects for the product itself, for which the shelf-stability is further increased with respect to cereal compositions comprising a greater amount of supplemented iron. Also, a reduced amount of supplemented iron has beneficial effects on the intestinal microbiota and intestinal physiology of the consumer.

### Step (e): Cooking

In a preferred embodiment, the process further comprises a step wherein the fermented cereals are cooked. If performed, the cooking of step (e) is preferably performed in between step (b) and (d). In step (e), the starch in the fermented cereal composition is cooked or gelatinized, to obtain pre-gelatinized starch. Especially in case the end product is an infant formula or a nutritional composition for weaning infants, it is highly recommended that the starch is pre-gelatinized and step (e) is performed. The cooking or gelatinizing of starch is well-known to the skilled person. The cooking of step (e) may be performed together with the drying of step (c). Especially drum dryers are known in the art to dry cereal slurries and at the same time gelatinize the starch. A suitable way to cook would be to heat the mixture for 5 minutes at 95 °C.

### Cereal composition

The invention further concerns a dry cereal composition. The composition according to the invention is obtainable by the process according to the invention. The dry cereal composition according to the invention typically has a molar ratio of phytate to iron of at most 1. Alternatively, the dry cereal composition according to the invention may be defined as a composition comprising fermented cereals and non-replicating lactic acid bacteria, wherein the composition has a molar ratio of phytate to iron of at most 1, at most 5000 cfu of lactic acid bacteria, and 1.0 to 15 mg lactic acid and at least 0.015 mg iron, per g dry weight. The invention further concerns a ready to feed cereal composition obtainable by reconstituting the dry cereal composition of the invention, with a food grade liquid. Herein, the food grade liquid is typically selected from water, follow on formula or ruminal milk. The cereal composition according to the invention comprising fermented cereals fermented by phytase-positive lactic acid bacteria as defined above, preferably by *Lactococcus lactis* CNCM I-5450. In one embodiment, the invention relates to a dry cereal composition comprising fermented cereals fermented by *Lactococcus lactis* CNCM I-5450, wherein the composition has a molar ratio of phytate to iron of at most 1.

The dry cereal composition according to the invention preferably has a phytic acid level of less than 50 mcg/g, more preferably less than 25 mcg/g of the composition.

The dry cereal composition according to the invention has improved bio-accessibility, and thus improved bio-availability of minerals, in particular iron. Furthermore, the dry cereal composition according to the invention, has improved organoleptic and digestive properties. This also applies to the ready-to-feed cereal composition obtained upon reconstitution of the dry cereal composition.

The cereal composition according to the invention typically is or is part of a pharmaceutical or nutritional composition, preferably a nutritional composition, more preferably a nutritional supplement, although complete nutritional compositions, i.e. that provide the complete nutritional requirements for a subject, are also envisioned within the context of the present invention. The nutritional composition may for example by a weaning food. The composition may also be a nutritional supplement, such as a supplement for pregnant or lactating women, a supplement for children or a supplement for elderly. These subjects, weaning infants, children, pregnant or lactating women and elderly have a higher risk of suffering from iron deficiency, and thus benefit the most from the composition according to the invention. Thus, in one aspect, the invention concerns a pharmaceutical or nutritional composition comprising the cereal composition according to the invention. All benefits and possible application defined herein for the cereal composition according to the invention equally apply to the pharmaceutical or nutritional composition according to the invention. In a preferred embodiment, the composition is a nutritional composition, preferably a complete nutritional composition or a nutritional supplement.

The pharmaceutical or nutritional composition according to the invention may, in addition to the cereal composition, contain further ingredients. The exact nature and ratio of these further ingredients may differ depending on the type of composition. The skilled person is well aware that the nutritional requirements of a weaning infant nutrition differ from those of a supplement for lactating women, and is able to adjust the composition accordingly. In one embodiment, the dry cereal composition is reconstitutable with a food grade or nutritional liquid, such as water or milk, including infant milk such as follow-on formula or growing-up milk. In an alternative embodiment, the dry cereal composition according to the invention is a reconstitutable cereal milk or a reconstitutable milk for weaning infants, wherein the dry cereal is mixed with components that make up a follow-on or young child formula in dry form, and that is to be reconstituted with food grade or nutritional liquid.

The benefits of the present invention are already achieved in case a part of the cereal present in the composition has been treated according to the present invention. That would already reduce the phytate content and thus improve the bio-availability of minerals such as iron. Nonetheless, it is preferred that at least 50 wt%, more preferably at least 80 wt%, most preferably all of the cereals in the composition are according to the present invention and/or obtainable by the process according to the present invention.

The cereal composition according to the present invention further comprises components that are prepared during the fermentation of step (a). This is reflected in the composition comprising fermented cereals. In a preferred embodiment, the composition contains at least 5 wt% fermented cereals, based on dry weight of the total product. Preferably, the composition comprises at least 10 wt%, more preferably at least 25 wt%, even more preferably at least 40 wt% based on dry weight of the total product, of the fermented cereals. The present composition comprises at most 100 wt% based on dry weight of the total product, of the fermented cereals. Preferably the composition comprises at most 90 wt%, more preferably at most 70 wt%, even more preferably at most 50 wt% based on dry weight of the total product, of the fermented cereals.

The fermented cereals further typically comprises bacterial cell fragments like glycoproteins, glycolipids, peptidoglycan, lipoteichoic acid (LTA), lipoproteins, nucleotides, and/or capsular polysaccharides. It is of advantage to use the fermented composition comprising inactivated bacteria and/or cell fragments directly as a part of the final nutritional product, since this will result in a higher concentration of bacterial cell fragments. Furthermore, upon fermentation and/or other interactions of lactic acid producing bacteria with the milk substrate, additional bioactive compounds can be formed, such as short chain fatty acids, bioactive peptides and/or oligosaccharides, and other metabolites. Such bioactive compounds that are produced during fermentation by lactic acid producing bacteria may also be referred to as post-biotics.

As a way to specify that the final nutritional composition comprises at least partly a fermented composition, and to specify the extent of fermentation, the level of lactic acid in the final nutritional composition can be taken, as this is the metabolic end product produced by the lactic acid producing bacteria upon fermentation. In view of the fermentation of step (a), the cereal composition according to the invention comprises lactic acid, which is formed upon fermentation by lactic acid bacteria. In one embodiment, the composition comprises 0.1 to 1.5 wt% lactic acid, more preferably from 0.2 to 1.0 wt%, based on dry weight of the nutritional composition. It is noted that the amounts of lactic acid given relate to the sum of lactic acid and lactate in case both are present. Alternatively or additionally, the lactic acid may be present in an amount of 0.5 - 30 mg per gram of fermented cereals, preferably 1 - 15 mg per g cereals, most preferably 2 - 10 mg per g cereals.

Preferably at least 50 wt%, even more preferably at least 90 wt%, of lactic acid is in the form of L-isomer. Thus in one embodiment L-lactic acid is more than 50 wt%, more preferably more than 90 wt%, based on the sum of total lactic acid and lactate. L-lactate and L-lactic acid is the same as L-(+)-lactate and L-(+)-lactic acid. L-lactic acid is easier metabolized and reduces the risk of acidosis, which may be an issue in infants. It is noted that one of the sources of iron can be ferrous lactate. In case ferrous lactate is selected as source of iron, the amount of lactate therefrom is in addition to the amount of lactate that is formed upon fermentation by lactic acid producing bacteria. Thus, in one embodiment, in case the source of iron is ferrous lactate, the present nutritional composition preferably comprises from 0.1 to 1.6 wt% lactic acid, more preferably from 0.2 to 1.1 wt%, based on dry weight of the nutritional composition. The common isomer of lactate in ferrous lactate is L-(+)-lactate.

The phytate content of the composition according to the invention is particularly low. This is reflected in the molar ratio of phytate to iron of at most 1, preferably at most 0.5, such as in the range of 0 - 0.5, more preferably 0.001 - 0.1. In addition to phytate (or myo-inositol hexakisphosphate (IP6)) to be in these ranges, it is also preferred that the content of the pentakisphosphate variant (IP5) is particularly low, preferably such that the molar ratio of IP5 to iron is at most 1, preferably at most 0.5, such as in the range of 0 - 0.5, more preferably 0.001 - 0.1. Most preferably, the combined content of IP6 and IP5 is such that the molar ratio of IP6+IP5 to iron is at most 1, preferably at most 0.5, such as in the range of 0 - 0.5, more preferably 0.001 - 0.1.

The composition according to the invention contains inactivated lactic acid bacteria. The total content of live lactic acid bacteria is typically at most 5 × 10³ cfu/g, preferably at most 1 × 10³ cfu/g.

In addition to the fermented cereals and all components that are comprised therein, the composition according to the invention may contain further ingredients, such as proteins, lipids, further carbohydrates (digestible and non-digestible), vitamins and minerals. The composition preferably comprises minerals, preferably one or more minerals selected from iron, zinc, calcium, magnesium and manganese. In a preferred embodiment, the composition comprises iron, more preferably all of the aforementioned minerals.

The composition according to the invention comprises iron. In the context of this invention, iron means Fe²⁺ or Fe³⁺. Preferably, the nutritional composition comprises non-haem iron, more preferably one or more iron sources selected from the group consisting of ferrous sulphate, ferrous lactate, ferrous gluconate, ferrous bisglycinate, ferrous citrate, ferrous fumarate, ferric diphosphate, and ferric ammonium citrate, more preferably ferrous sulphate and ferrous lactate. Wherever in this description an amount or concentration of iron is mentioned, this refers to the amount or concentration of Fe²⁺ or Fe³⁺, hence excluding the weight of the counter ion such as sulphate, lactate gluconate, etc., of the iron source. Sources of ferrous iron are preferred as sources of ferric iron need to be converted to ferrous iron in the body, the capacity of which may be limited in human subjects with an age of 0 to 36 months, e.g. infants and young children.

The present composition preferably comprises at least 0.015 mg iron per g dry weight, more preferably at least 0.03 mg per g dry weight. The present compositions preferably comprises not more than 0.1 mg iron per g dry weight, more preferably not more than 0.065 mg iron per g dry weight, even more preferably not more than 0.055 mg iron per g dry weight. Too much iron can result in poor product quality by peroxidising polyunsaturated acids and can have adverse health effects. The found improved iron bio-availability of iron allows for slightly lower iron concentrations than typically present in nutritional compositions such as weaning foods. The composition further preferably comprises 0.01 - 1.5 mg iron per g of fermented cereals, more preferably 0.05 - 1 mg iron per g of fermented cereals, most preferably 0.1 - 0.5 mg iron per g of fermented cereals.

In addition to iron, the composition may further contain zinc, calcium, magnesium and/or manganese. In case the composition comprises one or more of these elements, they are preferably present in the following amounts. In one embodiment, the composition comprises 0.1 - 50 mg calcium per g dry weight, preferably 1 - 25 mg calcium per g dry weight, most preferably 5 - 15 mg calcium per g dry weight. In one embodiment, the composition comprises 1 µg - 1.5 mg zinc per g dry weight, preferably 0.01 - 0.5 mg zinc per g dry weight, most preferably 0.05 - 0.17 mg zinc per g dry weight. In one embodiment, the composition comprises 0.05 - 15 mg magnesium per g dry weight, preferably 0.1 - 5 mg magnesium per g dry weight, most preferably 0.5 -1.5 mg magnesium per g dry weight. In one embodiment, the composition comprises 0.01 - 50 µg manganese per g dry weight, preferably 0.05 - 25 µg manganese per g dry weight, most preferably 0.1 - 11 µg manganese per g dry weight. The content of these minerals is of particular importance in case the cereal composition according to the invention is a weaning infant nutrition, as these are highly regulated. Hence, the ranges for the minerals provided here in particular apply to the weaning infant nutrition according to the invention.

In case the cereal composition according to the invention is a weaning infant nutrition, it typically contains further components such as proteins, lipids, further carbohydrates (digestible and non-digestible) and vitamins. The further definition of the lipid, carbohydrate and protein fraction provided here below refer to the weaning infant nutrition comprising the fermented cereals according to the invention.

### Lipid

The composition according to the invention typically contains a lipid fraction. In that case, the present nutritional composition preferably comprises at least one lipid selected from the group consisting of animal lipid (excluding human lipids) and vegetable lipids. Preferably the present composition comprises a combination of vegetable lipids and at least one oil selected from the group consisting of fish oil, animal oil, algae oil, fungal oil, and bacterial oil. The lipid of the present nutritional composition preferably provides 3 to 7 g per 100 kcal of the nutritional composition, preferably the lipid provides 4 to 6 g per 100 kcal. When in liquid form, e.g. as a ready-to-feed liquid, the nutritional composition preferably comprises 2.1 to 6.5 g lipid per 100 ml, more preferably 3.0 to 4.0 g per 100 ml. Based on dry weight the present nutritional composition preferably comprises 12.5 to 40 wt% lipid, more preferably 19 to 30 wt%. Preferably the lipid comprises the essential fatty acids alpha-linolenic acid (ALA), linoleic acid (LA) and/or long chain polyunsaturated fatty acids (LC-PUFA). The LC-PUFA, LA and/or ALA may be provided as free fatty acids, in triglyceride form, in diglyceride form, in monoglyceride form, in phospholipid form, or as a mixture of one or more of the above. Preferably the present nutritional composition comprises at least one, preferably at least two lipid sources selected from the group consisting of rape seed oil (such as colza oil, low erucic acid rape seed oil and canola oil), high oleic sunflower oil, high oleic safflower oil, olive oil, marine oils, microbial oils, coconut oil and palm kernel oil.

### Carbohydrates

The composition according to the invention typically contains a carbohydrate fraction. Although any edible carbohydrate known in the art may be present in the composition according to the invention, it preferably comprises digestible carbohydrates and/or oligosaccharides, most preferably both.

In a preferred embodiment, the digestible carbohydrate comprises one or more of glucose, fructose, galactose, sucrose, lactose, maltose and the maltodextrins. In one embodiment, the digestible carbohydrate comprises lactose and/or sucrose, most preferably at least lactose. The high amount of lactose in a fermented product surprisingly resulted in an improved iron bioavailability. The presence of substantial amounts of lactose is uncommon in fermented products, as the lactose is typically converted upon fermentation into organic acids. In order to prevent this further fermentation of lactose in the product, the product is in dry form such as a powder and by inactivating the lactic acid producing bacteria in step (b). Preferably, the present nutritional composition comprises at least 10 wt.% digestible carbohydrate based on dry weight of the nutritional composition, more preferably at least 20 wt.%, even more preferably at least 30 wt.% based on dry weight of the nutritional composition. The present nutritional composition comprises preferably no more than 75 wt.% lactose based on dry weight of the nutritional composition, more preferably no more than 60 wt.%, even more preferably no more than 50 wt.% based on dry weight of the nutritional composition.

The present nutritional composition preferably comprises non-digestible oligosaccharides. The presence of non-digestible oligosaccharides in a fermented product surprisingly further enhanced the iron bioavailability. Advantageously and most preferred, the non-digestible oligosaccharides are water-soluble (according to the method disclosed in L. Prosky et al, J. Assoc. Anal. Chem 71: 1017-1023, 1988) and are preferably oligosaccharides with a degree of polymerisation (DP) of 2 to 200. The average DP of the non-digestible oligosaccharides are preferably below 200, more preferably below 100, even more preferably below 60, most preferably below 40. The non-digestible oligosaccharides are not digested in the intestine by the action of digestive enzymes present in the human upper digestive tract (small intestine and stomach). The non-digestible oligosaccharides are fermented by the human intestinal microbiota. The present composition preferably comprises 1.0 to 20 wt.% total non-digestible oligosaccharide, more preferably 1 to 10 wt.%, even more preferably 2 to 10 wt.%, most preferably 2.0 to 7.5 wt.%, based on dry weight of the present composition.

The non-digestible oligosaccharides are preferably selected from the group consisting of fructooligosaccharides, such as inulin, non-digestible dextrins, galactooligosaccharides, such as transgalactooligosaccharides, xylooligosaccharides, arabinooligosaccharides, arabinogalactooligosaccharides, glucooligosaccharides, gentiooligosaccharides, glucomannooligosaccharides, galactomannooligosaccharides, mannanoligosaccharides, isomaltooligosaccharides, nigerooligosaccharides, glucomannooligosaccharides, chitooligosaccharides, soy oligosaccharides, uronic acid oligosaccharides, sialyloligosaccharides, such as 3-sialyllactose (3-SL), 6-sialyllactose (6-SL), lactosialylterasaccharide (LST) a,b,c, disialyllactoNtetraose (DSLNT), sialyl-lactoNhexaose (S-LNH), DS-LNH, and fucooligosaccharides, such as (un)sulphated fucoidan oligosaccharides, 2'-fucosyllactose (2'-FL), 3-FL, difucosyllactose, lacto-N-fucopenatose, (LNFP) I, II, III, V, Lacto-N-neofucopenaose (LNnFP), Lacto-N-difucosyl-hexaose (LNDH), and mixtures thereof, even more preferably selected from the group consisting of fructooligosaccharide, such as inulin, galactooligosaccharide, such as transgalactooligosaccharide, uronic acid oligosaccharide and fuco-oligosaccharide and mixtures thereof, even more preferably transgalactooligosaccharide, inulin and/or uronic acid oligosaccharides, most preferably transgalactooligosaccharides. In one embodiment of the composition according to the present invention, the non-digestible oligosaccharides are selected from the group consisting of transgalactooligosaccharides, fructooligosaccharides and galacturonic acid oligosaccharides and mixtures of thereof.

In one embodiment, the non-digestible oligosaccharides comprise a mixture of galactooligosaccharides and fructooligosaccharides. Preferably the mixture of galactooligosaccharides and fructooligosaccharides is present in a weight ratio of from 1/99 to 99/1, more preferably from 1/19 to 19/1, even more preferably from 1 to 19/1. This weight ratio is particularly advantageous when the galactooligosaccharides have a low DP and the fructooligosaccharides have a relatively high DP. Preferably the non-digestible oligosaccharides comprise a mixture of galactooligosaccharides with an average DP below 10, preferably below 6 and fructooligosaccharides with an average DP above 7, preferably above 11, even more preferably above 20. In one embodiment, the non-digestible oligosaccharides comprise a mixture of galactooligosaccharides and short chain fructooligosaccharides. Preferably the mixture of galactooligosaccharides and short chain fructooligosaccharides is present in a weight ratio of from 1/99 to 99/1, more preferably from 1/19 to 19/1, even more preferably from 1 to 19/1. Preferably the non-digestible oligosaccharides comprise a mixture of galactooligosaccharides with an average DP below 10, preferably below 6 and short chain fructooligosaccharides with an average DP below 10, preferably below 6.

In one embodiment, the non-digestible oligosaccharides comprise a mixture of short chain fructooligosaccharides and long chain fructooligosaccharides. Preferably the mixture of short chain fructooligosaccharides and long chain fructooligosaccharides is present in a weight ratio of from 1/99 to 99/1, more preferably from 1/19 to 19/1, even more preferably from 1/2 to 19/1, or alternatively in 2/1 to 1/2, preferably about 1 to 1. Preferably the non-digestible oligosaccharides comprise a mixture of fructooligosaccharide with an average DP below 10, preferably below 6 and a fructooligosaccharide with an average DP above 7, preferably above 11, even more preferably above 20.

### Protein

The composition according to the invention typically contains a protein fraction. Although any edible protein known in the art may be present in the composition according to the invention, it preferably comprises milk protein, such as casein a d/or whey protein, most preferably both. Preferably, the composition comprises one or more selected from the group consisting of whey protein, whey protein hydrolysate, casein and casein hydrolysate. Protein is preferably present in an amount in the range of 5 - 25 wt%, more preferably 8-20 wt%, most preferably 10- 18 wt%, based on total dry weight.

### Application

The cereal compositions according to the present invention are intended for consumption, typically human consumption, and further preferred target groups are defined here below. The cereal consumption is typically consumed after reconstitution with a food grade liquid. The composition according to the invention has a reduced content of phytate, compared to conventional fermented cereal compositions. In view of the reduced phytate content, the bio-availability of minerals of the composition according to the invention is increased. Hence, the composition according to the invention is particularly suitable to be administered to subjects, typically human subjects, at risk of reduced mineral adsorption, such as infants, young children, pregnant or lactating women and elderly. Most preferably the subject is an infant, especially having an age of 4 - 12 months. Herein, infants and young children typically refer to the group of humans having an age in the range of 0 - 10 years, preferably 0-5 years. Herein, elderly typically refers to the group of humans having an age above 55 years, preferably above 65 years.

In the context of the present invention, the mineral is preferably selected from iron, zinc, calcium, magnesium and manganese, and preferably includes at least iron. Since the reduced phytate content is expected to positively affect the bio-availability of all minerals, the mineral preferably contains more than one, most preferably all, of the aforementioned minerals.

In one embodiment, the methods and uses defined herein are non-medical.

Hence, the present invention concerns the use of the cereal composition according to the invention in preventing mineral deficiency. In other words, the invention concerns the composition according to the invention for use in preventing mineral deficiency. In other words, the invention concerns a method for preventing mineral deficiency, comprising administering the composition according to the invention to a subject in need thereof. In this context, mineral deficiency may be selected from iron deficiency, zinc deficiency, calcium deficiency, magnesium deficiency and manganese deficiency, more preferably iron deficiency. In the context of the present embodiment, the mineral deficiency may take the form of anaemia. The mineral deficiency is preferably prevented in a human subject, more preferably in a human subject selected from infants, young children, pregnant or lactating women and elderly. Most preferably the human subject is an infant.

Alternatively, the present invention concerns the use of the cereal composition according to the invention in increasing the bio-availability of minerals in a subject. In other words, the invention concerns the composition according to the invention for use in increasing the bio-availability of minerals in a subject. In other words, the invention concerns a method for increasing the bio-availability of minerals in a subject, comprising administering the composition according to the invention to a subject in need thereof. In this context, the bio-availability of minerals may also be referred to as the adsorption of minerals. The bio-availability of minerals is preferably increased in a human subject, more preferably in a human subject selected from infants, young children, pregnant or lactating women and elderly. Most preferably the human subject is an infant.

Alternatively, the invention further concerns the cereal composition according to the invention for use in providing nutrition to a subject at risk of mineral deficiency. In other words, the invention concerns the composition according to the invention for use in providing nutrition to a subject at risk of mineral deficiency. In other words, the invention concerns a method for providing nutrition to a subject at risk of mineral deficiency, comprising administering the composition according to the invention to a subject in need thereof. In this context, mineral deficiency may be selected from iron deficiency, zinc deficiency, calcium deficiency, magnesium deficiency and manganese deficiency, more preferably iron deficiency. In the context of the present embodiment, the mineral deficiency may take the form of anaemia. The subject is preferably a human subject, more preferably in a human subject selected from infants, young children, pregnant or lactating women and elderly. Most preferably the human subject is an infant.

The process according to the invention can be used to increase the bio-availability of minerals in (dry) cereals. This is accomplished by a reduction in the phytate content by virtue of the process according to the invention. Thus, in one aspect, the invention concerns the use of the process according to the invention for the increase the bio-availability of minerals in cereals. In this context, the bio-availability of minerals may also be referred to as the bio-accessibility of minerals. A further aspect of the invention concerns the use of the process according to the invention for decreasing or lowering phytic acid levels in cereal.

In the context of the present invention, bio-accessibility is the amount of an ingested nutrient, e.g. iron, that is potentially available for absorption by the (human) body, and is dependent on digestion and/or release from the food matrix. Bio-availability is the amount of an ingested nutrient that is absorbed and available for physiological functions, and is dependent on digestion and/or release from the food matrix, absorption by intestinal cells and transport to the body cells. Absorption is the uptake of a nutrient into the cell, and is dependent on digestion and/or release form the food matrix.

In the context of the present invention, anaemia is a decrease in number of red blood cells or less than the normal quantity of haemoglobin in blood. Anaemia refers in particular to iron deficiency anaemia, i.e. anaemia caused by insufficient iron bio-availability. Iron-deficiency anaemia is caused by insufficient dietary intake and absorption of iron and causes approximately half of all anaemia cases in the world. According to the WHO anaemia is defined as a haemoglobin content of less than 6.83 mmol/l blood in infants or young children of 6 months to 5 years, of less than 7.13 mmol/l in children of 5 to 11 years of age, of less than 7.45 mmol/l in teens of 12 to 14 years of age, of less than 7.45 mmol/l in non-pregnant women with age above 15 years, of less than 6.83 mmol/l in pregnant women, and of less than 8.07 mmol/l in men above 15 years of age. Symptoms are pallor, fatigue, light-headedness and weakness. Other symptoms can be headaches, trouble sleeping, loss of appetite, paleness, reduced resistance to infection, fragile nails. Iron-deficiency anaemia for infants in their earlier stages of development has greater consequences than it does for adults. An infant made severely iron-deficient during its earlier life cannot recover to normal iron levels even with iron therapy. Iron-deficiency anaemia affects neurological development by decreasing learning ability, negatively altering motor functions and negatively effecting socioemotional functioning as behaviour. Additionally, iron-deficiency anaemia has a negative effect on physical growth. In pregnant women, of which it is estimated that 50% suffers from iron deficiency or anaemia, there is an increased need for iron. Anaemia may increase the risk of preterm or small birth weight babies.

In the context of the present invention, iron deficiency (sideropaenia or hypoferreamia) is a stage preceding iron-deficiency anaemia. The body has less than adequate iron levels. It can for example be determined by measuring an abnormal value for at least two of the three following indicators, serum ferritin, transferrin saturation, and free erythrocyte protoporphyrin, while still having a haemoglobin content above the threshold for anaemia. Iron-deficiency anaemia is abnormal values of 2 out of 3 indicators with anaemia (a haemoglobin content below the threshold for anaemia).

In the context of the present invention, 'prevention' of a disease or certain disorder also means 'reduction of the risk' of a disease or certain disorder and also means 'treatment of a human subject at risk' of said disease or said certain disorder.

### Examples

The following examples illustrate the invention.

### Example 1: Phytase activity assessment

A pool of 867 probiotic lactic acid bacteria strains was tested for their phytase activity. The pool contained 530 strains of the genus *Lactobacillus,* 23 strains of the genus *Leuconostoc,* 254 strains of the genus *Bifidobacterium* and 60 strains of the genus *Pediococcus.* All stains were grown on a medium lacking phosphorus. A neutral MRS medium was modified to reduce its phosphate concentration. This modification was intended to allow to measure the phosphate released by phytate degradation without reaching the saturation threshold of the standard range. To achieve this, fractions containing high concentrations of phosphate such as yeast extract and potassium phosphate were removed and to compensate for these components, a mixture of vitamins B and iron sulfate was added. After fermentation, cultures or supernatants were incubated in presence of sodium phytate and the total available phosphorus released from samples was measured. A quantitative method to measure total "available phosphorus" released from samples was used. Phytase activity was measured in terms of inorganic phosphate released from phytic acid by strains using a Megazyme kit assay. Phytate was added and the presence of free phosphate was determined using the QuantiChrom Phosphate Assay Kit (DIPI-500), by BioAssay Systems. The presence of free phosphate was indicative of phytase activity. 66 strains showed phytate degrading activity (7.6%). Of the 142 *L. lactis* strains tested, 5 strains (3.5 %) showed phytase degrading activity. When combining the selection criteria of a high phytase degrading properties with other desired product technological properties, *Lactococcus* strain CNCM I-5450 was the most preferred strain.

### Example 2

A slurry of wheat semolina cereal (Alpine Savoie) was prepared by adding milled, dry, raw wheat cereals dispersed in water. The cereal had an amount of phytic acid of 200 mg/100 g. The amount of iron in the raw ingredient was 0.8 mg/100 g. The cereal slurry had a dry matter of about 30 wt% based on total weight. The cereal slurry was constantly stirred between 600 - 800 rpm and heated up to 30 °C. This temperature is optimal for the growth of the *Lactococcus lactis* strain that was used for phytate degradation. The initial pH of this slurry was about 6.

A stock of a phytase-positive *L. lactis* strain CNCM I-5450, identified in Example 1, was grown in LM17 media, and stored in 40% glycerol aliquots at -80 °C. The cereal slurry was inoculated from this stock at a density of about 6.2 log CFU/g based at total weight. The bacteria were propagated. Bacterial growth took place until a pH of 5.15 was reached. Acidification to this pH level took about 5.5 h. At this pH, the activity of phytase from wheat flour was found to be optimal. During this phase 1, the conditions were ideal for bacterial growth to occur, and an increase of more than 2 log CFU/g was observed and an average growth up to a level of 8.4 log CFU/g was reached (see Table 2).

Once the pH reached 5.15, the second phase of the process started, where phytic acid degradation occurred. The second phase was performed in four distinct legs (see Table below). In leg F1, the temperature of the slurry fermented by the *L. lactis* was increased to 55 °C, after which the slurry was held at that temperature for at most 16 hours. During this time, the bacteria did not further acidify the medium to a significant extent (the pH was reduced to about 5.05), and they were locked in a stationary phase. No decrease in total CFU /g was observed. In control process F2, the temperature in the second step was kept at 30 °C and pH was kept constant at 5.15 by addition of 1 M sodium hydroxide, during which some further bacterial growth was observed. In leg F3, the temperature in the second step was raised to 55 °C and pH was kept constant at 5.15 by addition of 1M sodium hydroxide. Just as for process F1, the bacteria were locked in a stationary phase, where no decrease in total CFU/g was observed. Lastly, in process F4, the temperature in the second step was kept at 30 °C and pH was not controlled. The bacteria replicated (a further increase in CFU was observed) and further acidified the medium to a level of about 4.3.

**Table 1.**

| **Entry** | **Temperature of step (2)** | **pH of step (2)** |
|---|---|---|
| F1 | 50 °C | Uncontrolled (lowered to 5.05) |
| F2 | 30 °C | Controlled at 5.15 |
| F3 | 50 °C | Controlled at 5.15 |
| F4 | 30 °C | Uncontrolled (lowered to 4.3) |

For all four legs, samples were collected at four different time points during the process (at t = 0, t = 5.5 h (end of phase 1), t = 7.5 h and t = 21 h). The samples were centrifuged at 4 °C for 10 minutes at 9000xg. The supernatant was collected and the samples were heat treated (5 min at 95 °C) in order to inactivate the phytase activity or cease any remaining metabolic activity of bacteria. The level of free phosphate was determined using the QuantiChrom Phosphate Assay Kit (DIPI-500), by BioAssay Systems. The release of free phosphate during the process is an indication of the degradation of phytic acid. The phytic acid concentration is calculated from the free phosphate concentration, assuming that all phytic acid present is in the form of inositolhexaphosphate (IP6), and that, in order to make iron bio-accessible, two molecules of phosphate have to be released, converting IP6 into IP4. According to literature, lower forms of phytate (from IP1 to IP4) have lower inhibitory effect on iron absorption.

During phase 1 (bacterial growth phase), ending at t = 5.5 h, no significant increase in free phosphate was observed. At t = 7.5 h, an increase in free phosphate was observed for processes F1 and F3 (214.4 µg/mL and 179.7 µg /mL of free phosphate was formed, respectively), while for processes F2 and F4 no significant increase in free phosphate was observed. At t = 21 h, for processes F1 and F3 a further increase of free phosphate was observed to 405.3 µg/mL and 446.6 µg/mL, respectively, while for process F2 a very small increase to 108.7 µg/mL and for process F4 hardly any increase (to 4.4 µg/mL) was observed. In processes F1 and F3, the temperature was increased to 55 °C upon changing to phase 2. In control processes F2 and F4, where phase 2 operated at 30 °C, no meaningful increase of free phosphate was observed, irrespective of the lowering of pH. It can thus be concluded that the combination of temperature and pH influences the phytase activity, and pH between 5.05 - 5.15 and temperature of about 55 °C are ideal for degrading phytate. The amount of L-lactic acid with F1 and F2 was about 40 umol/g at t = 21 h, which corresponds to about 3.6 mg/g or 0.36 wt% based on dry weight. The amount of D-lactic acid was below detection level.

**Table 2: The results on concentrations on L. lactis and free phosphate concentrations (t = 0 is set to zero) are given in the table below:**

| **Entry** | ***L. lactis* (log cfu/g)** | | | **Free phosphate (µg/mL)** | | | |
|---|---|---|---|---|---|---|---|
| | t = 0 h | t = 5.5 h | t = 21 h | t = 0 h | t = 5.5 h | t = 7.5 h | t = 21 h |
| F1 | 6.2 | 8.4 | 8.5 | 0 | -16.6 | 214.4 | 405.3 |
| F2 | 6.2 | 8.2 | 8.9 | 0 | 57.9 | 47.0 | 108.7 |
| F3 | 6.2 | 8.7 | 8.9 | 0 | 87.6 | 179.7 | 446.6 |
| F4 | 6.2 | 8.3 | 8.7 | 0 | -66.1 | 7.1 | 4.4 |

In order to surpass the inhibitory effect of phytic acid on iron bio-availability, the phytic acid to iron molar ratio should be at most 1. Taking into account the initial concentration of phytic acid in the raw wheat flour, it was calculated that a final phytic acid concentration of at most 9.46 mg per 100 g of the cereal ingredient is needed for avoiding the inhibitory effect on the bio-availability of iron. This concentration was only reached with process F1 and F3. Iron was chosen for this analysis since it is one of the minerals most affected by the presence of phytic acid, exhibiting one of the highest phytic acid to mineral ratio, but these results are equally applicable to other minerals. In Table 3 it is shown that for both F1 and F3 processes, the phytic acid concentration was lower than the target level of 9.46 mg per 100 g cereal already at t = 7.5 h, and further decreased at t = 21h. Until the end of the experiment at t = 21 h, no significant decrease in phytic acid concentration was observed for both F2 and F4 processes.

**Table 3:**

| **Entry** | **Phytic acid (mg/100 g)** | | | |
|---|---|---|---|---|
| | t = 0 h | t = 5.5 h | t = 7.5 h | t = 21 h |
| F1 | 200 | 219 | 0 | 0 |
| F2 | 200 | 134 | 146 | 75 |
| F3 | 200 | 100 | 0 | 0 |
| F4 | 200 | 276 | 192 | 195 |

It can be concluded that by using a two-step fermentation process, where conditions are initially set to favour bacterial growth followed by a second phase favouring phytase activity, phytic acid can be reduced to a phytic acid-to-iron ratio at which phytic acid has no longer an inhibitory effect on iron bio-accessibility and absorption.

### Example 3:

A nutritional supplement according to the present invention may have the following composition (based on dry weight):

| | |
|---|---|
| Fermented cereals produced by process F3 of example 1 | 99.999 wt% |
| Thiamin | 0.84 mg/100 g |

### Example 4:

A nutritional supplement according to the present invention may have the following composition (based on dry weight):

| | |
|---|---|
| Cereals fermented by phytase positive lactic acid bacteria (mixture of wheat flour, maize starch, rice flour, rye flour (85/1/1/12)) | 75 wt% |
| Sugar | 24 wt% |
| Soy lecithin | 0.12 wt% |
| Palm oil | 1 wt% |
| Ascorbic acid | 0.12 wt% |
| Fe(III) pyrophosphate | 0.03 wt% |
| Live lactic acid bacteria | < 10³ cfu/g |
| L-lactic acid | 0.1 - 0.2 wt% |
| Phytic acid | < 1 mg/100 g |
| Phytic acid / iron | < 1 |

This product is packaged and to be consumed after reconstitution with a suitable liquid. For example, 25 g of the supplement and 200 ml ready to drink follow on formula, young child formula, milk from cow, goat or sheep, together form a ready to consume nutritional composition.

### Example 5

A nutritional composition for weaning infants according to the present invention, in the form of a reconstitutable powder. It contains the fermented cereals according to F1 or F3 of example 1, demineralized whey powder, skimmed milk powder, sucrose, vegetable fat, maltodextrin, mineral blend (amongst with Calcium carbonate and ferric pyrophosphate), a vitamin mix and flavours. It may in the following ingredients (per 100 g dry weight):

| Component | Preferred range | Example |
|---|---|---|
| Fermented durum wheat semolina | 15 - 50 g | 37 g |
| Skimmed milk powder | 5-20 | 16 |
| Vegetable fat blend | 3 - 20 g | 9 g |
| Demineralized whey powder | 10 - 35 g | 23 g |
| sucrose | 2 - 20g | 10 g |
| iron | 4-20mg | 8.58 mg |
| calcium | 300-600 mg | 484 mg |
| Vitamin mix | 0 - 1 g | |
| Other minor ingredients to add up to 100 g | | |

### Example 6

A slurry of wheat Semolina cereal was prepared by dispersing raw milled flour in water. The cereal had an amount of 200mg/100g. The amount of iron in the raw ingredient was 0.8 mg/100g. The cereal slurry had a dry matter of about 30 wt% based on total weight. The cereal slurry was constantly stirred between 600-800 rpm and heated up to 37 °C. This temperature was tested after further optimization of the bacterial growth step of phytase positive *Lactococcus lactis* strain used for phytate degradation. The initial pH of this slurry was about pH 6.

The cereal slurry was inoculated from the frozen stock described in Example 2. The cereal slurry was inoculated from this stock at a density of about 7.6 log CFU/g based at total weight (Table A, entry F1). The bacteria were propagated. Bacterial growth took place for 1 hour and 30 minutes. This incubation time revealed to be sufficient to activate the bacterial and increase a minimum of 0.5 log CFU/g and reduce the pH of the media to 5.7, closer to the optimal pH of phytase activity.

Afterwards, the second phase of the process was initiated, where phytic acid degradation occurred. The temperature of the slurry fermented by the *L. lactis* strain was raised to 45 °C, as it was found to be an ideal temperature not only to promote phytase activity but also reduce the risk of cereals gelatinization. This temperature was held for 2 hours. During this time, the bacteria did not acidify the medium further below pH 5.3. No further increase in CFU/g was observed.

A second leg was added to the experiment (Table A, F2) following the same procedure as F1, but stopping the reaction after 1 hour and 30 minutes of incubation time.

A third leg was added to the experiment (Table A, F3) following the second phase described for F1, by initiating the reaction at 45 °C and pH 5.15. The cereal slurry was inoculated from the same stock at a density of about 7.2 log CFU/g based at total weight, and the reaction was stopped after 2h of incubation.

Finally, a forth leg was added to the experiment (Table A, F4) following the same procedure as F1 but without bacterial inoculation. After 1h and 30min of incubation at 37 °C, the temperature was increased to 45 °C and pH corrected to 5.15. After 2h of incubation, the reaction was stopped.

**Table A:**

| Entry | Description | Step a (1h30min) | Step b (2h) |
|---|---|---|---|
| F1 | Optimized process | 37°C | 45°C |
| F2 | Control with bacterial inoculation (only phase 1) | 37°C | |
| F3 | Control with bacterial inoculation (only phase 2) | | 45°C (pH corrected to 5.15*) |
| F4 | Control (no ino) | 37°C | 45°C (pH corrected to 5.15*) |

| | | | |
|---|---|---|---|
| * lactic acid was used | | | |

In all 4 legs, samples were collected at specific time points during the process. The samples were treated in a similar way explained in Example 2 for the purpose of quantification of the free phosphate released during the process, which in turn is an indication of the degradation of phytic acid.

The further optimization of the growth phase of the bacterial strain in Wheat semolina (step a) of entries F1 and F2) resulted in an increased yield of free phosphate after an incubation of 1.5h (158.8 µg/mL and 165.9 µg/mL for F1 and F2, respectively). With F1 continuing into phase 2, the free phosphate release increased to 414.2 µg/mL after 2h of incubation time. This shows that the combination of a growth and enzymatic step are ideal to achieve a higher degradation of phytic acid. Reference is made to the results given in Table B.

Initiating the bacterial incubation with the ideal conditions for the enzymatic activity (F3) revealed to be detrimental not only for bacterial growth ( below log 3 cfu/g after 2h of incubation time) but also for free phosphate release (achieving a free phosphate release of 96.8 µg/mL after 2h of incubation time).

The optimized process was also conducted but without bacterial inoculation (entry F4). It is shown that after 1.5h of incubation time, an increase of free phosphate was observed up to 114.5 µg/mL. Continuing into phase 2, the free phosphate release increased to 200.5 µg/mL. However, from the data it is clear that the bacterial inoculation boosted the release of free phosphate to more than double (F1) when compared to the non-inoculated version.

**Table B:**

| Entry | Log cfu/g | | | | Free Phosphate (µg/mL) | | | |
|---|---|---|---|---|---|---|---|---|
| | T = 0h | T = 1.5h | T = 2h | T= 3.5h | T = 0h | T = 1.5h | T = 2h | T = 3.5h |
| F1 | 7.6 | 8.1 | -/- | 7.6 | 0.0 | 158.8 | -/- | 414.2 |
| F2 | 7.6 | 8.1 | -/- | 7.6 | 0.0 | 165.9 | -/- | -/- |
| F3 | 5.0 | -/- | **below log 3* | -/- | 0.0 | -/- | 96.8 | -/- |
| F4 | -/- | -/- | -/- | -/- | 0.0 | 114.5 | -/- | 200.5 |

| | | | | | | | | |
|---|---|---|---|---|---|---|---|---|
| -/- means that no samples were tested at this point of time | | | | | | | | |

It can be concluded that by using a two-step fermentation process, where conditions are initially set to favor bacterial growth followed by a second phase favoring phytase activity, it increases the amount of free phosphate released when compared to the individual steps or when no bacteria is inoculated.

### Example 7:

A set of 6 samples representing raw material (wheat semolina flour and rice bran flour) and fermented products thereof were analyzed for inositol hexakisphosphate (InsP6, phytate) and "lower" inositol phosphate contents by HPLC with post-column detection with ferric ion. Single samples were analyzed immediately following extraction. The extraction method is based on the method of Zeller *et al.* [1].

Samples were analyzed with HPLC by injecting 20 µL of the extracted sample on a CarboPA200 collumn (Dionex, UK) eluted with mathanesulfonic according to Whitfield *et al.* [2]. Eluted peaks were identified by comparison with a set of standards prepared by acid hydrolysis of sodium phytate according to Madsen *et al.* [3]. HPLC peaks were integrated with ChromNav (v.2) software of the Jasco HPLC machine. InsP6 was quantified by comparison with sodium phytate standard from maize (Merck Millipore Product No. 407125). Calculations assume the same detector response for different inositol phosphates, of which there are twenty possible InsP3 isomers, fifteen possible InsP4 isomers and six possible InsP5 isomers. Different isomers at each level of phosphorylation are summed. InsP2 peaks were not obviously detected, while InsP1 and inorganic phosphate are obscured in the solvent front. Chromatography data was exported as x,y data and redrawn in GraFit (v.7).

The estimated phosphorous content (element P) was derived from the summed molar content of different inositol phosphate peaks, weighted by number of phosphates. Of the 6 samples analyzed, only the raw material samples had detectable inositol phosphate peaks. The fermented rice flour sample (sample No.6) was the only fermented sample for which InsP4 and InsP3 peaks were identified. Besides this, all fermented samples contained no detectable inositol phosphate signal. We can conclude that the developed process has efficiently degraded phytate.

| Sample No. | Material and process conditions | InsP3 | | InsP4 | | InsP5 | | InsP6 | | SUM |
|---|---|---|---|---|---|---|---|---|---|---|
| | | nmol P/g | % | nmol P/g | % | nmol P/g | % | nmolP /g | % | nmolP/ g |
| Wheat semolina Flour | | | | | | | | | | |
| 1 | Raw ingredient | 0 | | 980 | 4 | 6251 | 24 | 19018 | 72 | 26249 |
| 2 | Process w/ conditions 1 | 0 | | 0 | | 0 | | 0 | | 0 |
| 3 | Process w/ conditions 2 | 0 | | 0 | | 0 | | 0 | | 0 |
| 4 | Process w/ conditions 3 | 0 | | 0 | | 0 | | 0 | | 0 |

| Rice bran Flour | | | | | | | | | | |
|---|---|---|---|---|---|---|---|---|---|---|
| 5 | Raw ingredient | 0 | | 0 | 0 | 1913 | 7 | 25570 | 93 | 27483 |
| 6 | Process w/ conditions 3 | 3405 | 66 | 1744 | 34 | 0 | | 0 | | 5149 |

| | Step a) | Step b) |
|---|---|---|
| Process w/ conditions 1 | 30 °C for 5h30min | 55 °C for 17h |
| Process w/ conditions 2 | 37 °C for 2h30min | 45 °C for 2h |
| Process w/ conditions 3 | 37 °C for 1h30min | 45 °C for 2h |

At the end of step a), the pH was 5.15 and remained stable during step b). For conditions 2, pH decreased slightly during step b), pH 5.1 to 4.9. For conditions 3, we observed also a slight pH decrease, for Wheat semolina flour from pH 5.7 to 5.3, and for rice bran flour from pH 5.9 to 5.5.

### References

[1] Zeller E, Schollenberger M, Witzig M, Shastak Y, Kühn I, Hoelzle LE, Rodehutscord M. Interactions between supplemented mineral phosphorus and phytase on phytate hydrolysis and inositol phosphates in the small intestine of broilers1,2. Poult Sci. 2015 May;94(5):1018-29. doi: 10.3382/ps/pev087. Epub 2015 Mar 25. PMID: 25810408.
[2] Whitfield H, White G, Sprigg C, Riley AM, Potter BVL, Hemmings AM, Brearley CA. An ATP-responsive metabolic cassette comprised of inositol tris/tetrakisphosphate kinase 1 (ITPK1) and inositol pentakisphosphate 2-kinase (IPK1) buffers diphosphosphoinositol phosphate levels. Biochem J. 2020 Jul 31;477(14):2621-2638. doi: 10.1042/BCJ20200423. PMID: 32706850; PMCID: PMC7115839.
[3] Madsen CK, Brearley CA, Brinch-Pedersen H. Lab-scale preparation and QC of phytase assay substrate from rice bran. Anal Biochem. 2019 Aug 1;578:7-12. doi: 10.1016/j.ab.2019.04.021. Epub 2019 May 2. PMID: 31054994; PMCID: PMC6587120.

### Example 8:

A slurry of 6 different type of cereal flours were prepared by dispersing raw milled flour in water. The cereal slurry had a dry matter of about 30 wt% based on total weight. The cereal slurry was constantly stirred between 600-800 rpm and heated up to 37 °C. This temperature was tested after further optimization of the bacterial growth step of phytase-positive *Lactococcus lactis* strain used for phytate degradation. The initial pH of each slurry varied depending on the cereal source used, ranging from pH 6.0 to pH 6.23.

The cereal slurry was inoculated from the frozen stock described in Example 2. The cereal slurry was inoculated from this stock at a density between 7 - 7.7 log CFU/g based at total weight. The bacteria was propagated. Bacterial growth took place for 1 hour and 30 minutes. This incubation time revealed to be sufficient to activate the bacterial and increase a minimum of 0.4 log CFU/g.

Afterwards, the second phase of the process was initiated, where phytic acid degradation occurred. The temperature of the slurry fermented by the *L. lactis* strain was raised to 45 °C, as it was found to be an ideal temperature not only to promote phytase activity but also reduce the risk of gelatinization of the cereals. This temperature was held for 2 hours. During this time, the bacteria did not acidify the medium further below pH 5.3. No further increase in CFU/g was observed.

In the table below is shown an estimation of the concentration of phytic acid degraded (mg/100g) over time based on the concentration of free phosphate released. It is assumed that all phytic acid is in its most phosphorylated form (IP6).

**Table C:**

| Entry | Raw ingredient | Log cfu/g | | | Phytic acid degraded (mg/100g) | | |
|---|---|---|---|---|---|---|---|
| | | T = 0h | T = 1.5h | T= 3.5h | T = 0h | T = 1.5h | T = 3.5h |
| F1 | Wheat Semolina (Reference) | 7.6 | 8.1 | 7.6 | 0.0 | 182.12 | 475.02 |
| F2 | Rice | 7.6 | 8.0 | 7.6 | 0.0 | 59.41 | 621.7 |
| F3 | Corn | 7.7 | 8.0 | 7.9 | 0.0 | 0.0 | 183.15 |
| F4 | Whole wheat | 7.5 | 8.1 | 7.5 | 0.0 | 0.0 | 448.42 |
| F5 | Buckwheat | 7.4 | 8.0 | 7.9 | 0.0 | 0.0 | 1290.09 |
| F6 | Spelt | 7.0 | 7.9 | 7.6 | 0.0 | 93.12 | 227.53 |

**As** shown in Table C, 1.5h of incubation at 37 °C exerted in low (F2 and F6) to no degradation of phytic acid (F3, F4 and F5). However, when continuing to Step b), and upon 2h of incubation at 45 °C, all variants exhibited high degradation of phytic acid. These data show that the fermentation process originally created and optimized for Wheat Semolina flour (reference, F1 in table C), can be transferred and applied to other cereal sources.

## Claims

1. A process for producing a dry cereal composition, comprising:
(a) fermenting phytic acid-containing cereals by phytase-positive lactic acid bacteria at a temperature below 45 °C, until a pH of at most 5.9 is reached,
(b) heating the fermented cereals obtained in step (a) to a temperature in the range of 40 - 55 °C, for a period of at least 1.5 h; and
(c) drying the fermented and phytase-treated cereals originating from step (b) to obtain the dry cereal composition.

2. The process according to claim 1, wherein during step (b) a pH decrease is realized to pH 5.5 or below, preferably in the range of 5 - 5.5, and/or wherein during step (b) the pH is kept below 5.5, preferably in the range of 5 - 5.5.

3. The process according to claim 1, wherein step (a) involves fermenting phytic acid-containing cereals by phytase-positive lactic acid bacteria at a temperature below 45 °C, until a pH of below 5.5 is reached, or wherein step (a) is performed at a temperature between 20 and 45 °C, preferably between 30 and 40 °C, and/or until a pH in the range of 5 - 5.3 is reached.

4. The process according to any one of the preceding claims, wherein in step (b) the temperature is kept for 1.5 - 24 h, more preferably in the range of 2 - 16 h.

5. The process according to any one of the preceding claims, wherein the process further comprises:
(d) the addition of further ingredients, preferably at least a source of iron, to the fermented cereals prior to the drying step (c); and/or
(e) cooking of the fermented cereals in between step (b) and (c).

6. The process according to any one of the preceding claims, wherein the drying of step (c) is performed by drum drying, and/or until a water activity of less than 0.3 is achieved.

7. The process according to any one of the preceding claims, wherein:
- the lactic acid bacteria are selected from the genera *Lactococcus,* preferably selected from *L. lactis,* even more preferably *L. lactis* CNCM I-5450; and/or
- the cereals are selected from wheat, sorghum and millet, and mixtures thereof.

8. The process according to any one of the preceding claims, wherein step (a) is performed in a fermentation broth comprising the cereals and 10⁶ - 10⁸ cfu/mL of phytase-positive lactic acid bacteria.

9. Dry cereal composition obtainable by the process according to any one of claims 1 - 8, preferably having a molar ratio of phytate to iron of at most 1; and/or a phytic acid content of less than 50 mcg/g, preferably less than 25 mcg/g.

10. A dry cereal composition comprising fermented cereals and non-replicating lactic acid bacteria, wherein the composition has a molar ratio of phytate to iron of at most 1, and contains at most 5000 cfu lactic acid bacteria, 1.0 to 15 mg lactic acid and at least 0.015 mg iron, per gram dry weight.

11. A ready-to-feed cereal composition obtainable by reconstituting the dry cereal composition of anyone of claim 9 or 10 with a food grade liquid, preferably wherein the food grade liquid is selected from the group consisting of water, follow on formula or ruminal milk.

12. The composition according to any one of claims 9 - 11 for use in:
- providing nutrition to a subject at risk of mineral deficiency, preferably wherein the subject is selected from infants, young children, pregnant or lactating women and elderly, or
- preventing mineral deficiency, preferably iron deficiency and/or anemia.

13. Use of the process according to any one of claim 1 - 8 for:
- increasing the bio-availability of minerals and/or bio-accessibility of minerals in cereals, preferably wherein the mineral is selected from iron, zinc, calcium, magnesium and manganese, or
- decreasing phytic acid levels in cereal.

14. A method for increasing the bio-availability of minerals in a human subject, comprising administering the composition according to any one of claims 9 - 11 to the subject, preferably wherein the mineral is selected from iron, zinc, calcium magnesium and manganese, and preferably wherein the subject is selected from infants, young children, pregnant or lactating women and elderly.

15. A method for providing nutrition to a subject at risk of mineral deficiency, preferably wherein the subject is selected from infants, young children, pregnant or lactating women and elderly, wherein the composition according to any one of claims 9 - 11 is administered to the subject at risk.

## Patentansprüche

1. Verfahren zum Herstellen einer trockenen Getreidezusammensetzung, umfassend:
(a) Fermentieren von phytinsäurehaltigem Getreide durch Phytase-positive Milchsäurebakterien bei einer Temperatur unter 45 °C, bis ein pH-Wert von höchstens 5,9 erreicht ist,
(b) Erhitzen des in Schritt a) erhaltenen fermentierten Getreides auf eine Temperatur im Bereich von 40 bis 55 °C während eines Zeitraums von mindestens 1,5 Stunden; und
(c) Trocknen des fermentierten und mit Phytase behandelten Getreides aus Schritt (b), um die trockene Getreidezusammensetzung zu erhalten.

2. Verfahren nach Anspruch 1, wobei während Schritt (b) eine pH-Absenkung auf pH 5,5 oder darunter, vorzugsweise im Bereich von 5 - 5,5 realisiert wird und/oder wobei während Schritt (b) der pH-Wert unter 5,5, vorzugsweise im Bereich von 5 - 5,5 gehalten wird.

3. Verfahren nach Anspruch 1, wobei in Schritt (a) phytinsäurehaltiges Getreide durch Phytase-positive Milchsäurebakterien bei einer Temperatur unter 45 °C fermentiert wird, bis ein pH-Wert von unter 5,5 erreicht ist, oder wobei Schritt (a) bei einer Temperatur zwischen 20 und 45 °C, vorzugsweise zwischen 30 und 40 °C, und/oder bis ein pH-Wert im Bereich von 5 - 5,3 erreicht ist, durchgeführt wird.

4. Verfahren nach einem der vorhergehenden Ansprüche, wobei in Schritt (b) die Temperatur für 1,5 - 24 Stunden, vorzugsweise im Bereich von 2 - 16 Stunden, gehalten wird.

5. Verfahren nach einem der vorhergehenden Ansprüche, wobei das Verfahren ferner Folgendes umfasst:
(d) Zugeben weiterer Bestandteile, vorzugsweise mindestens einer Eisenquelle, zu dem fermentierten Getreide vor dem Trocknungsschritt (c); und/oder
(e) Kochen des fermentierten Getreides zwischen Schritt (b) und (c).

6. Verfahren nach einem der vorhergehenden Ansprüche, wobei die Trocknung von Schritt (c) durch Trommeltrocknung und/oder bis zum Erreichen einer Wasseraktivität von weniger als 0,3 durchgeführt wird.

7. Verfahren nach einem der vorhergehenden Ansprüche, wobei:
- die Milchsäurebakterien aus der Gattung *Lactococcus* ausgewählt werden, vorzugsweise aus *L*. *lactis,* noch bevorzugter *L*. *lactis* CNCM I-5450 ausgewählt werden; und/oder
- das Getreide aus Weizen, Sorghum und Hirse sowie deren Mischungen ausgewählt wird.

8. Verfahren nach einem der vorhergehenden Ansprüche, wobei Schritt (a) in einer Fermentationsbrühe durchgeführt wird, die das Getreide und 10⁶ - 10⁸ cfu/mL Phytase-positive Milchsäurebakterien enthält.

9. Trockene Getreidezusammensetzung, die nach dem Verfahren gemäß einem der Ansprüche 1 bis 8 erhältlich ist, vorzugsweise mit einem Molverhältnis von Phytat zu Eisen von höchstens 1; und/oder einem Phytinsäuregehalt von weniger als 50 mcg/g, vorzugsweise weniger als 25 mcg/g.

10. Trockene Getreidezusammensetzung, die fermentiertes Getreide und nicht replizierende Milchsäurebakterien umfasst, wobei die Zusammensetzung ein Molverhältnis von Phytat zu Eisen von höchstens 1 aufweist und höchstens 5000 cfu Milchsäurebakterien, 1,0 bis 15 mg Milchsäure und mindestens 0,015 mg Eisen pro Gramm Trockengewicht enthält.

11. Fütterungsfertige Getreidezusammensetzung, die durch Rekonstituieren der trockenen Getreidezusammensetzung nach einem der Ansprüche 9 oder 10 mit einer lebensmitteltauglichen Flüssigkeit erhältlich ist, wobei die lebensmitteltaugliche Flüssigkeit vorzugsweise aus der Gruppe bestehend aus Wasser, Folgemilch oder Pansenmilch ausgewählt ist.

12. Zusammensetzung nach einem der Ansprüche 9 bis 11 zur Verwendung beim:
- Bereitstellen von Nahrung für ein Subjekt, bei dem das Risiko eines Mineralmangels besteht, wobei das Subjekt vorzugsweise aus Säuglingen, Kleinkindern, schwangeren oder stillenden Frauen und älteren Menschen ausgewählt ist, oder
- Vorbeugen von Mineralstoffmangel, vorzugsweise Eisenmangel und/oder Anämie.

13. Verwendung des Verfahrens nach einem der Ansprüche 1 bis 8 zum:
- Erhöhen der Bioverfügbarkeit von Mineralien und/oder der Biozugänglichkeit von Mineralien im Getreide, wobei das Mineral vorzugsweise aus Eisen, Zink, Calcium, Magnesium und Mangan ausgewählt ist, oder
- Verringerung des Phytinsäuregehalts im Getreide.

14. Verfahren zur Erhöhung der Bioverfügbarkeit von Mineralien in einem menschlichen Subjekt, umfassend die Verabreichung der Zusammensetzung gemäß einem der Ansprüche 9 bis 11 an das Subjekt, wobei das Mineral vorzugsweise aus Eisen, Zink, Calcium, Magnesium und Mangan ausgewählt ist und wobei das Subjekt vorzugsweise aus Säuglingen, Kleinkindern, schwangeren oder stillenden Frauen und älteren Menschen ausgewählt ist.

15. Verfahren zur Bereitstellung von Nahrung für ein Subjekt, bei dem das Risiko eines Mineralmangels besteht, wobei das Subjekt vorzugsweise aus Säuglingen, Kleinkindern, schwangeren oder stillenden Frauen und älteren Menschen ausgewählt ist, wobei die Zusammensetzung gemäß einem der Ansprüche 9 bis 11 dem gefährdeten Subjekt verabreicht wird.

## Revendications

1. Procédé de production d'une composition de céréales sèches, comprenant :
a) fermenter des céréales contenant de l'acide phytique par des bactéries lactiques positives à la phytase à une température inférieure à 45 °C, jusqu'à ce qu'un pH d'au plus 5,9 soit atteint,
(b) chauffer les céréales fermentées obtenues à l'étape (a) à une température dans la plage de 40 à 55 °C, pendant une période d'au moins 1,5 h ; et
(c) sécher les céréales fermentées et traitées à la phytase provenant de l'étape (b) pour obtenir la composition de céréales sèches.

2. Procédé selon la revendication 1, où pendant l'étape (b) une diminution du pH est réalisée jusqu'à un pH de 5,5 ou inférieur, de préférence dans la plage de 5 à 5,5, et/ou où pendant l'étape (b) le pH est maintenu en dessous de 5,5, de préférence dans la plage de 5 à 5,5.

3. Procédé selon la revendication 1, où l'étape (a) implique la fermentation de céréales contenant de l'acide phytique par des bactéries lactiques positives à la phytase à une température inférieure à 45 °C, jusqu'à ce qu'un pH inférieur à 5,5 soit atteint, ou où l'étape (a) est exécutée à une température entre 20 et 45 °C, de préférence entre 30 et 40 °C, et/ou jusqu'à ce qu'un pH dans la plage de 5 à 5,3 soit atteint.

4. Procédé selon l'une quelconque des revendications précédentes, où à l'étape (b) la température est maintenue pendant 1,5 à 24 h, plus préférablement dans la plage de 2 à 16 h.

5. Procédé selon l'une quelconque des revendications précédentes, où le procédé comprend en outre :
(d) l'ajout d'autres ingrédients, de préférence au moins une source de fer, aux céréales fermentées avant l'étape de séchage (c) ; et/ou
(e) cuisson des céréales fermentées entre les étapes (b) et (c).

6. Procédé selon l'une quelconque des revendications précédentes, où le séchage de l'étape (c) est exécuté par séchage au tambour, et/ou jusqu'à ce qu'une activité de l'eau de moins de 0,3 soit atteinte.

7. Procédé selon l'une quelconque des revendications précédentes, où :
- les bactéries lactiques sont sélectionnées parmi le genre *Lactococcus,* de préférence sélectionnées parmi *L. Lactis*, encore plus préférablement *L. Lactis* CNCM I-5450 ; et/ou
- les céréales sont sélectionnées parmi du blé, du sorgho et du millet, et des mélanges de ceux-ci.

8. Procédé selon l'une quelconque des revendications précédentes, où l'étape (a) est exécutée dans un bouillon de fermentation comprenant les céréales et de 10⁶ à 10⁸ ufc/mL de bactéries lactiques positives à la phytase.

9. Composition de céréales sèches pouvant être obtenue par le procédé selon l'une quelconque des revendications 1 à 8, de préférence ayant un rapport molaire de phytate/fer d'au plus 1 ; et/ou une teneur en acide phytique inférieure à 50 mcg/g, de préférence inférieure à 25 mcg/g.

10. Composition de céréales sèches comprenant des céréales fermentées et des bactéries lactiques ne se répliquant pas, où la composition a un rapport molaire phytate/fer d'au plus 1, et contient au plus 5 000 ufc de bactéries lactiques, de 1,0 à 15 mg d'acide lactique et au moins 0,015 mg de fer, par gramme de poids sec.

11. Composition de céréales prête à consommer pouvant être obtenue en reconstituant la composition de céréales sèches selon l'une quelconque des revendications 9 ou 10 avec un liquide de qualité alimentaire, de préférence où le liquide de qualité alimentaire est sélectionné parmi le groupe consistant en eau, une préparation de suite ou du lait ruminal.

12. Composition selon l'une quelconque des revendications 9 à 11 pour une utilisation pour :
- fournir une nutrition à un sujet présentant un risque de carence en minéraux, de préférence où le sujet est sélectionné parmi des nourrissons, de jeunes enfants, des femmes enceintes ou allaitantes et des personnes âgées, ou
- prévenir une carence en minéraux, de préférence une carence en fer et/ou une anémie.

13. Utilisation du procédé selon l'une quelconque des revendications 1 à 8 pour :
- augmenter la biodisponibilité des minéraux et/ou la bioaccessibilité des minéraux dans les céréales, de préférence où le minéral est sélectionné parmi du fer, du zinc, du calcium, du magnésium et du manganèse, ou
- diminuer des niveaux d'acide phytique dans les céréales.

14. Procédé pour augmenter la biodisponibilité des minéraux chez un sujet humain, comprenant l'administration de la composition selon l'une quelconque des revendications 9 à 11 au sujet, de préférence où le minéral est sélectionné parmi du fer, du zinc, du calcium, du magnésium et du manganèse, et de préférence, où le sujet est sélectionné parmi des nourrissons, de jeunes enfants, des femmes enceintes ou allaitantes et des personnes âgées.

15. Procédé pour fournir une nutrition à un sujet présentant un risque de carence en minéraux, de préférence où le sujet est sélectionné parmi des nourrissons, de jeunes enfants, des femmes enceintes ou allaitantes et des personnes âgées, où la composition selon l'une quelconque des revendications 9 à 11 est administrée au sujet à risque.
